# EUROPEAN PATENT APPLICATION

(11) **EP 2 058 427 A1**
(43) Date of publication of application: **13.05.2009**
(21) Application number: 07380307.4
(22) Date of filing: 06.11.2007
(51) Int. Cl.: D06F 58/20, D06F 58/24, D06F 58/26

(54) **Household appliance having a heat pump unit and means for cooling a component thereof**

(71) Applicant: BSH Electrodomésticos España, S.A., 31620 Pamplona Navarra (ES)
(72) Inventor: Balerdi Azpilicueta, Pilar, 31272 Barindano (Navarra) (ES); Berazaluce Minondo, Iñigo, 31004 Pamplona (ES); San Martin Sancho, Roberto, 31200 Estella (ES)
(74) Representative: Duschek, Horst Jürgen

(57) **Abstract**

The invention relates to a household appliance 1 having a housing 2 and comprising within said housing 2 a control unit 3, a drying chamber 5 for containing articles 6 to be dried, a closed-loop process air channel 8 having a first blower 9 operable by said control unit 3 for conveying process air along the articles 6 to effect drying, a heat pump unit 12, 13, 14, 15, 16, 17, 18 operable by said control unit 3 for extracting humidity from the process air, a condensate collector 20 for collecting condensate thus formed by the heat pump unit 12, 13, 14, 15, 16, 17, 18, and means 22, 23, 24, 25 for cooling at least one component 15, 18 of said heat pump unit 12, 13, 14, 15, 16, 17, 18 including a second blower 22 operable by said control unit 3. Said means 22, 23, 24, 25 for cooling include an open-loop cooling channel 24 having said second blower 22, for conveying cooling air from outside said housing 2 to said at least one component 15, 18.

## Description

The invention relates to a household appliance having a housing and comprising within said housing a control unit, a drying chamber for containing articles to be dried, a closed-loop process air channel having a first blower operable by said control unit for conveying process air along the articles to effect drying, a heat pump unit operable by said control unit for extracting humidity from the process air, a condensate collector for collecting condensate thus formed by the heat pump unit, and means for cooling at least one component of said heat pump unit including a second blower operable by said control unit.

A household appliance of this type is apparent from EP 1 209 277 B1.

That document as well as EP 0 467 188 B1 contain a detailed description of a household appliance that is configured as a dryer for drying articles which are wet laundry. The documents refer to many details of the household appliance that may be necessary or at any rate advantageous in making or using the appliance. Accordingly, the whole content of these documents is incorporated herein by reference.

Related art for household appliances is apparent from documents WO 2006/029953 A1 that specifies a dishwasher in relation to a laundry dryer or combined laundry washer and dryer, DE 197 38 735 C2 that discloses a household appliance with a different type of heat pump, EP 1 672 294 A2, and EP 1 672 295 A2, the latter two disclosing air conditioning devices that have cooling circuits which are in some aspects similar to the heat pump considered herein incorporated therein.

Drying of wet articles in a household appliance generally requires evaporating the humidity on the articles and transporting away by means of a current of heated process air. Such process air loaded with evaporated humidity may be discharged from the appliance, or subjected to a condensation process to recover the transported humidity in liquid form for collection and disposal. Such condensation process in turn requires cooling the process air, thereby extracting heat. That heat may again be discharged from the appliance simply; in order to keep consumption of energy low however, it may be desired to recover that heat at least to an extent. To that end, a household appliance has been developed that incorporates a heat pump which recovers energy taken from the process air by evaporating a refrigerant or heat transfer fluid, subsequently compressing that heat transfer fluid and releasing heat from it back into the process air which circulates in an essentially closed loop. While it may be expedient or even required to open such process air loop at least occasionally as described in EP 0 467 188 B1, pertinent IEC standards require that a dryer which is claimed to recover humidity by condensation keep any leakage of humidity below 20% of the total humidity present. Problems still to be encountered with household appliances incorporating heat pumps are high manufacturing costs, relatively long periods needed to dry convenient charges of laundry or the like, and possible environmental hazards from heat transfer fluids applied in such appliances. To mitigate such hazards that are predominantly related to ozone-destroying properties of such compounds, chlorinated hydrocarbons that had been applied frequently in the past are presently prohibited from use due to pertinent legislation. Two other concerns that have grown to become determinative for the design of heat pump systems containing heat transfer fluids are the Global Warming Potentials of such compounds, that is their effect as infrared backscatterers when dispersed in the atmosphere, and, of course, their flammabilities.

The pickup of humidity from articles to be dried by process air is only effective if the process air is heated over any normal ambient temperature, preferably to a temperature higher than 60°C. That temperature will be brought down by the evaporation process to a somewhat lower temperature. At any rate, a temperature around or above 35°C at an inlet of an evaporator heat exchanger may be expected to pose a problem to a heat pump of the type specified in the introductory chapter and designed in accordance with practice common in the art of refrigeration, in that compressors and refrigerant fluids (generally specified as "heat transfer fluids" herein) from normal refrigeration practice are not suitable for the purpose. It has been considered to obtain relief by reverting to refrigerants of remarkably high critical temperatures so as to ascertain their function at working temperatures up to 60°C, but no thorough analysis and guidance is available so far. Other measures that have been applied to obtain relief are bringing excess heat out of the appliance, by exhaling warm process air in exchange for cooler air and including additional heat exchangers to take excess heat from the heat transfer fluid.

As a general remark, not only heat pump units of the type specified above are considered for use in a household appliance dedicated to drying articles. As examples, heat pump units that rely on utilizing the familiar Peltier effect or thermal effects related to adsorption and desorption of certain adsorptives at certain adsorbents (e. g., water as adsorptive used in combination with a Zeolith as adsorbent) may be specified. Every heat pump, however, requires an input of energy to effect the desired pumping of heat from a cold terminal to a warm terminal, with such input of energy resulting in an amount of excess heat generated in addition to the heat that is pumped. On one hand, it is in accordance with usual practice to develop a heat pump unit that minimizes production of such excess heat. On the other hand, at least an amount of excess heat may be welcome in a household appliance dedicated to drying, as usual practice requires preheating the articles to be dried to an elevated temperature to help evaporate liquid from the articles. If the heat pump unit is the only source of heat in the appliance, it is only the excess heat that is available for the preheating. Accordingly, the preheating may take a very long time if the heat pump unit is designed to minimize excess heat; to speed up the drying process, even an additional electric heater may be provided to provide for preheating over a suitably short period of time.

As to EP 1 209 277 B1 again, there is disclosed a household appliance comprising a heat pump unit and a second blower dedicated to establish a flow of air around the compressor included in the heat pump unit, for cooling the compressor. The document however does not address the problem that the usual housing of a household appliance will provide a considerable degree of heat insulation of the system contained in the housing from the ambient of the appliance. On one hand, this insulation is quite profitable as it helps prevent undesirable leakage of heat from the drying process. On the other hand, heat contained in the housing will spread into the heat pump unit and heat up its components including the refrigerant possibly contained therein, and possibly impart the proper function of the heat pump unit. It may be noted that the second blower can provide for some re-distribution of heat within the housing; in sum however, the second blower's contribution to removal of excess heat from the heat pump will be low.

Accordingly, it is an object of the invention to specify a household appliance as defined in the introductory chapter herein that has a heat pump which is detailed in a way so as to alleviate the problems specified above and allows for quicker drying of articles at an appropriate expense.

The present invention provides a solution embodied in the household appliance as defined in the independent claim. Preferred embodiments of the invention are defined in the dependent claims.

According to the invention, there is specified a household appliance having a housing and comprising within said housing a control unit, a drying chamber for containing articles to be dried, a closed-loop process air channel having a first blower operable by said control unit for conveying process air along the articles to effect drying, a heat pump unit operable by said control unit for extracting humidity from the process air, a condensate collector for collecting condensate thus formed by the heat pump unit, and means for cooling at least one component of said heat pump unit including a second blower operable by said control unit. Said means for cooling include an open-loop cooling channel having said second blower, for conveying cooling air from outside said housing to the at least one component.

The invention provides means for balancing generation of excess heat within the housing of the appliance with removal of heat from the inside of the housing. According to the invention, excess heat generated may be dissipated from the appliance by transporting the excess heat away from the appliance through the dedicated open-loop cooling channel which conveys the excess heat out of the housing and into the appliance's ambient. The invention sets out from the discovery that the heat insulating properties of the housing need to be taken into account to provide for proper handling of such excess heat. It may be stated that any known household appliance that solely relies on a heat pump unit for drying has failed to provide means for fully dissipating excess heat to avoid any negative influence on the drying process.

In addition, the invention enables utilization of excess heat generated by the heat pump unit to speed up preheating, by limiting the dissipation of excess heat to stages of the drying process that are designed to be more or less stationary. In particular, excess heat may be admitted to remain within the housing during initial stages of the process where preheating of the articles to be dried is still incomplete.

Further, the controlled dissipation of excess energy according to the invention may produce an overall reduction of energy consumption for a drying process due to a reduction of time required for the process, by regarding excess heat generated by the heat pump unit not as an unavoidable inconvenience but as a proper design element for the drying process. In this context, a separate heater for use during an initial stage of the drying process to help preheating may be avoided as well.

Not at last, the invention provides efficient help in controlling the temperatures within the heat pump unit, to avoid excesses and establish substantially constant operating temperatures within given ranges. This will greatly improve the appliance's flexibility for functioning in a variety of circumstances given by varying ambient temperatures and loads.

In accordance with a preferred embodiment of the invention, the heat pump unit comprises an evaporator heat exchanger included in the process air channel for cooling the process air by evaporating a refrigerant, a liquefier heat exchanger for heating said process air by liquefying the refrigerant, a closed-loop refrigerant channel for conveying the refrigerant, a compressor for compressing the refrigerant upon exiting said evaporator heat exchanger and forwarding to the liquefier heat exchanger, and a throttle for decompressing the refrigerant upon exiting said liquefier heat exchanger and forwarding to said evaporator heat exchanger. This qualifies the compressor-type heat pump for application with the invention. More preferred, the at least one component to be cooled by cooling air conveyed through the open-loop cooling channel includes the compressor. Thereby, effective cooling is provided to a prominent source of excess heat in the compressor-type heat pump. More preferred also, the refrigerant channel comprises a refrigerant cooler for cooling the refrigerant, and the at least one component includes the refrigerant cooler. Thereby, another means to remove excess heat from the compressor-type heat pump is provided, contributing to an increase in reliability and operational stability.

In accordance with another preferred embodiment of the invention, a temperature sensor operable by the control unit is disposed within the housing for generating a signal dependent from a temperature within said housing, and the control unit is programmed to operate the second blower in response to the signal. This enables operational control of the inventive means for cooling. In particular, the means for cooling may be set inoperational during an initial period of operation during a drying process, to allow excess heat generated to contribute to a quick heating up of the appliance and the articles placed therein to be dried. Removal of excess heat may be applied only to improve stability of operation during periods where operation is desired to be stationary at least to an extent, by setting the means for cooling operational only during such periods. More preferred, the sensor is disposed at the heat pump unit, and the temperature to be detected is a temperature of the refrigerant. Still more preferred, the sensor is disposed adjacent to the liquefier heat exchanger, to obtain a temperature reading that corresponds to a maximum temperature attained by the refrigerant during its cycling through the heat pump unit. Yet more preferred, the control unit is programmed to operate said second blower under a condition that the signal indicates that the temperature is above a predetermined threshold.

In accordance with a further preferred embodiment of the invention, the second blower has a fixed-speed motor operable by said control unit, and the control unit is programmed to operate the motor intermittently in response to the signal obtained from the temperature sensor. As an alternative, the second blower has a variable-speed motor operable by the control unit, and the control unit is programmed to operate said motor at speeds varying in response to the signal.

In accordance with yet another preferred embodiment of the invention, the cooling channel comprises a guide including the second blower, the guide connecting an inlet in the housing to said at least one component for cooling and opening into said housing, and the housing has at least one outlet allowing cooling air to flow out of said housing. More preferred, the at least one outlet is a multiplicity of outlets. It may be noted that it is quite common for a household appliance to have a housing that comprises some outlets connecting the appliance's interior to its environment, the outlets being placed in a back wall of the housing in particular. In a condensation-type dryer however, such outlets do not have any function associated with the normal operation of the dryer. Their principal determination is to allow for a small exchange of air within the interior to avoid collection of undesirable humidity therein, etc. In accordance with the preferred embodiment just specified, such outlets are applied in a particular useful way to assist in removing excess heat from the appliance.

In accordance with still another preferred embodiment of the invention, the heat pump unit is a sole means for extracting humidity from the process air. Such appliance generally has no means that would allow for dissipation of excess heat from the process air channel and the components associated thereto without any such means being especially provided. The invention provides a useful and simple means to allow for an efficient control of heat contained in the process air channel and its associated components.

In accordance with still a further preferred embodiment of the invention, the drying chamber is a rotatable drum, and the articles to be dried are pieces of laundry.

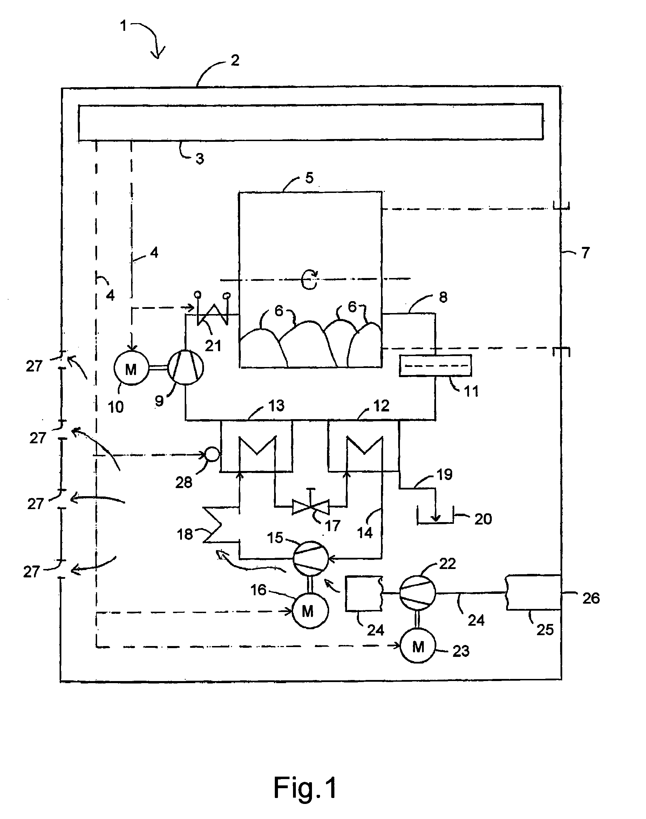

An exemplary embodiment of the invention comprising a combination of many preferred embodiments as described above is detailed now with reference to the accompanying drawing. Fig.1: This drawing shows a sketch of a vertical section through a household appliance as embodied in a dryer for drying laundry.

Figure 1 shows a household appliance 1 comprising a housing 2. In practice, that housing 2 will be shaped according to de facto standards that would call, for example, for a column having a length and a depth of 60 cm each and a height of 80 cm, in Europe. In the housing 2 there is disposed a control unit 3 that controls, via control lines 4, the various components of the appliance 1 that are functional when the appliance 1 is operated. The control unit 3 is also designed to provide an interface between the appliance 1 and a user, via inputting means like dials, switches, and toggles, and outputting means like alphanumeric displays and indicator lights. Disposed within the housing 2 is a drying chamber 5 that is determined to contain articles 6 to be dried. Presently, the drying chamber 5 is a drum rotatable around an axis by a motor not shown for simplicity. The articles 6 to be dried are pieces of laundry 6, and may be placed into the drum 5 through a door 7 that allows access through the housing 2.

Within the housing 2 there is also disposed a process air channel 8 which has a first blower 9 operated by a first blower motor 10 for conveying process air along the laundry 6 to effect drying in a closed loop. The process air picks up humidity from the laundry 6 and is guided through a lint collector 11, to catch lint, which is an amount of small fibrous particles taken from the laundry 6 and suspended within the process air as it exits drum 5.

Upon exiting the lint collector 11, the process air flows through a heat pump unit 12, 13, 14, 15, 16, 17, 18. That unit comprises an evaporator heat exchanger 12 which is provided to cool the process air flowing through, in order to make humidity collected from the laundry 6 condense to liquid that may in its turn be removed from the process air. Subsequently, the process air flows into a liquefier heat exchanger 13 where it is heated again, prior to being conveyed back to the drum 5 by first blower 9. Condensate that has been separated from the process air in the evaporator heat exchanger 12 flows through a condensate guide 19 to a condensate collector 20 for storing as long as the drying process runs. Subsequently, the condensate collector 20 may be removed from the appliance 1, and the condensate disposed of appropriately. An electric heater 21 is also present in the process air channel 8 between the first blower 9 and the drum 5. This electric heater 21 may be used to obtain a quick pre-heating of the process air channel 8 and the articles 6 to be dried. As a rule, the heat pump unit 12 to 18 will provide for any necessary pre-heating only very slowly, which may be regarded as a furious disadvantage by a user, due to the normally quite high purchasing price of such appliance 1 comprising a heat pump unit 12 to 18.

In the heat pump unit 12 to 18, a working fluid or refrigerant is conveyed through a refrigerant channel 14 in a closed loop. The refrigerant channel 14 comprises the evaporator heat exchanger 12 and the liquefier heat exchanger 13, a compressor 15 driven by compressor motor 16, and a throttle 17 in addition. As an optional component, a refrigerant cooler 18 is also comprised by the refrigerant channel 14. The function of the heat pump unit 12 to 18 is as follows: The refrigerant enters the evaporator heat exchanger 12 in a liquid state; within the evaporator heat exchanger 12, the refrigerant is evaporated by absorbing heat from the process air flowing through. The evaporated refrigerant exits the evaporator heat exchanger 12 and is conveyed to the compressor 15. There, it is compressed to a relatively high pressure and forwarded to the liquefier heat exchanger 13. In the liquefier heat exchanger 13, the refrigerant transfers heat generated by its compression to the process air flowing through, and is liquefied thereby. The refrigerant cooler 18 may be included into the refrigerant channel 14 in order to allow for some additional cooling of the refrigerant, which may be necessary to keep temperature levels within the heat pump unit 12 to 18 below pertinent maxima. In the present application, the temperature of the refrigerant may become much higher than the temperature of a refrigerant in a refrigerator or a climate control application where heat pump units as the one shown here are also frequently used. Accordingly, the thermodynamic properties of the refrigerant used may necessitate some additional cooling, in order to avoid critical states of the refrigerant that might question stable operation of the heat pump unit 12 to 18. Anyway, liquefied refrigerant will exit the liquefier heat exchanger 13 and flow through a throttle 17. Such throttle 17 may be a check valve or a capillary as a appropriate. Within the throttle 17, the internal pressure of the refrigerant is reduced; allowing the refrigerant to evaporate in the evaporator heat exchanger 12 which is entered upon exiting the throttle 17, thus completing the cycle and closing the loop formed by refrigerant channel 14.

To facilitate cooling of the heat pump unit 12 to 18, means 22, 23, 24, 25, 26, 27 are provided to affect a flow of cooling air to cool the compressor 15 with associated compressor motor 16 and refrigerant cooler 18. These means 22, 23, 24, 25, 26, 27 comprise a second blower 22 driven by a second blower motor 23, the second blower 22 included into open-loop cooling channel 24. That channel comprises a cooling air guide 25 that opens at an inlet 26 to an ambient of the appliance 1 and leads through second blower 22 to the compressor 15 and the refrigerant cooler 18. The cooling air guide 25 ends within the housing 2 near the compressor 15 and the refrigerant cooler 18. Cooling air exiting guide 25 may flow more or less freely about components 15, 16 and 18 to cool, and exit housing 2 at a plurality of outlets 27. These outlets 27 are indicated only schematically; in reality, they may be slit-like structures in a back wall that is part of the housing 2. At any rate, the said means 22, 23, 24, 25, 26, 27 provide for cool air from the ambient to be guided towards those components of the heat pump unit 12 to 18 where a dissipation of excess heat is to be effected. It is no disadvantage that such excess heat is carried more or less freely through housing 2 and along functional units of the appliance 1 housed therein; quiet to the contrary, the transport of warm air about these functional units contributes to avoiding undesirable losses of heat from such units.

In order to control the dissipation of excess heat as explained above, a temperature sensor 28 operable by the control unit 3 is disposed adjacent to the liquefier heat exchanger 13, in order to measure a temperature of the refrigerant in or at the liquefier heat exchanger 13. That temperature is an effective indication of the thermal load imposed on the heat pump unit 12 to 18, and can be utilized in several ways to improve the function of the appliance 1. First of all, operation of second blower 22 can be effected only under condition that the temperature measured by the sensor 28 exceeds a predetermined threshold. Secondly, a degree of control of the said temperature can be affected by operating the second blower 22 in response to the signal. In case that the second blower motor 23 is a fixed-speed motor 23, control of operation may be effected by operating the motor 23 intermittently in response to the signal obtained from the said temperature. A fixed-speed motor 23 is a proper choice due to the relative cheapness of such motor. In case that a finer control is desired, the second blower motor 23 may also be a variable speed-motor that may be more expensive but that allows a fine control of its output power. In such case, the motor 23 may be operated at speeds varying in response to the signal.

At any rate, the invention provide for effective control and disposal of excess heat in a household appliance designed for drying articles by operation of a heat pump unit.

### LIST OF REFERENCE NUMERALS

- 1: household appliance, laundry dryer
- 2: housing
- 3: control unit
- 4: control line
- 5: drying chamber
- 6: article to be dried, piece of laundry
- 7: door
- 8: process air channel
- 9: first blower
- 10: first blower motor
- 11: lint collector
- 12: heat pump unit, evaporator heat exchanger
- 13: heat pump unit, liquefier heat exchanger
- 14: heat pump unit, refrigerant channel
- 15: heat pump unit, compressor
- 16: heat pump unit, compressor motor
- 17: heat pump unit, throttle
- 18: heat pump unit, refrigerant cooler
- 19: condensate guide
- 20: condensate collector
- 21: electric heater
- 22: second blower
- 23: second blower motor
- 24: open-loop cooling channel
- 25: cooling air guide
- 26: inlet
- 27: outlet
- 28: temperature sensor

## Claims

1. Household appliance (1) having a housing (2) and comprising within said housing (2) a control unit (3), a drying chamber (5) for containing articles (6) to be dried, a closed-loop process air channel (8) having a first blower (9) operable by said control unit (3) for conveying process air along the articles (6) to effect drying, a heat pump unit (12, 13, 14, 15, 16, 17, 18) operable by said control unit (3) for extracting humidity from the process air, a condensate collector (20) for collecting condensate thus formed by the heat pump unit (12, 13, 14, 15, 16, 17, 18), and means (22, 23, 24, 25) for cooling at least one component (15, 18) of said heat pump unit (12, 13, 14, 15, 16, 17, 18) including a second blower (22) operable by said control unit (3), **characterized in that** said means (22, 23, 24, 25) for cooling include an open-loop cooling channel (24) having said second blower (22), for conveying cooling air from outside said housing (2) to said at least one component (15, 18).

2. Household appliance (1) as claimed in claim 1, wherein said heat pump unit (12, 13, 14, 15, 16, 17, 18) comprises an evaporator heat exchanger (12) included in said process air channel (8) for cooling the process air by evaporating a refrigerant, a liquefier heat exchanger (13) for heating said process air by liquefying said refrigerant, a closed-loop refrigerant channel (14) for conveying said refrigerant, a compressor (15) for compressing said refrigerant upon exiting said evaporator heat exchanger (12) and forwarding to said liquefier heat exchanger (13), and a throttle (17) for decompressing said refrigerant upon exiting said liquefier heat exchanger (13) and forwarding to said evaporator heat exchanger (12).

3. Household appliance (1) as claimed in claim 2, wherein said at least one component (15, 18) includes said compressor (15).

4. Household appliance (1) as claimed in claim 2 or claim 3, wherein said refrigerant channel (14) comprises a refrigerant cooler (18) for cooling said refrigerant, and wherein said at least one component (15, 18) includes said refrigerant cooler (18).

5. Household appliance (1) as claimed in one of the preceding claims, wherein a temperature sensor (28) operable by said control unit (3) is disposed within said housing (2) for generating a signal dependent from a temperature within said housing (2), and wherein said control unit (3) is programmed to operate said second blower (22) in response to the signal.

6. Household appliance (1) as claimed in claim 5, wherein said sensor (28) is disposed at said heat pump unit (12, 13, 14, 15, 16, 17, 18), and wherein the temperature is a temperature of the refrigerant.

7. Household appliance (1) as claimed in claim 6, wherein said sensor (28) is disposed adjacent to said liquefier heat exchanger (13).

8. Household appliance as claimed in one of claims 5 to 8, wherein said control unit (3) is programmed to operate said second blower (22) under a condition that the signal indicates that the temperature is above a predetermined threshold.

9. Household appliance (1) as claimed in one of claims 5 to 8, wherein said second blower (22) has a fixed-speed motor (23) operable by said control unit (3), and wherein said control unit (3) is programmed to operate said motor (23) intermittently in response to the signal.

10. Household appliance (1) as claimed in one of claims 5 to 8, wherein said second blower (22) has a variable-speed motor (23) operable by said control unit (3), and wherein said control unit (3) is programmed to operate said motor (23) at speeds varying in response to the signal.

11. Household appliance (1) as claimed in one of the preceding claims, wherein said cooling channel (24) comprises a guide (25) including said second blower (22), said guide (25) connecting an inlet (26) in said housing (2) to said at least one component (15, 18) for cooling, and opening into said housing (2), and wherein said housing (2) has at least one outlet (27) allowing cooling air to flow out of said housing (2).

12. Household appliance as claimed in claim 11, wherein said at least one outlet (27) is a multiplicity of outlets (27).

13. Household appliance (1) as claimed in one of the preceding claims, wherein said heat pump unit (12, 13, 14, 15, 16, 17, 18) is a sole means for extracting humidity from the process air.

14. Household appliance as claimed in one of the preceding claims, wherein said drying chamber (3) is a rotatable drum (3), and wherein the articles (6) to be dried are pieces of laundry (6).
